# EUROPÄISCHE PATENTANMELDUNG

(11) **EP 0 866 536 A2**
(43) Veröffentlichungstag der Anmeldung: **23.09.1998**
(21) Anmeldenummer: 98104716.0
(22) Anmeldetag: 16.03.1998
(51) Int. Cl.: H02H 3/33

(54) **Fehlerstromschutzschalter für Allstrom**

(30) Priorität: 19.03.1997 DE 29705030 U
(71) Anmelder: SIEMENS AKTIENGESELLSCHAFT, 80333 München (DE)
(72) Erfinder: Elischer, Werner, 91080 Spardorf (DE)

(57) **Zusammenfassung**

Unter Allstrom wird üblicherweise Wechselstrom, Pulsstrom von Gleichrichterschaltungen und Gleichstrom verstanden. Zur Erfassung derartiger unterschiedlicher Fehlerströme ist beim Stand der Technik jeweils ein separater Summenstromwandler notwendig. Gemäß der Erfindung dient ein einziger Summenstromwandler (11) mit einem Ringkern gleichermaßen als Pulsstromwandler für den Pulsstromsignalzweig (10) und als Gleichstromsignalgeber für den Gleichstromsignalzweig (20) und sind Mittel (8, 41, 42) zur selektiven Einspeisung von Pulsstrom und/oder Gleichstrom in den jeweiligen Auswertesignalzweig vorhanden.

## Beschreibung

Die Erfindung bezieht sich auf einen Fehlerstromschutzschalter für Allstrom mit wenigstens einem Summenstromwandler und einer nachgeschalteten Auswerteschaltung für jeweils einen für Pulsstrom und/oder Gleichstrom geeigneten Signalzweig.

Fehlerstromschutzschalter für sogenannten Allstrom, d.h. für Wechselstrom, Pulsstrom von Gleichrichterschaltungen und für Gleichstrom, sind beispielsweise aus der DE 3 543 985 A1 und der DE 3 543 948 B1 bekannt. Üblicherweise haben sie zwei Summenstromwandler. Dabei transformiert der erste Summenstromwandler Pulsströme und Wechselströme zur Weiterverarbeitung im Pulsstromzweig. Bei Überschreitung eines Grenzwertes wird eine Auslösespule erregt und die Abschaltung ausgelöst. Mit dem zweiten Summenstromwandler kann der Gleichstrom erfaßt werden, da dessen Sekundärwicklung einen induktiven Widerstand darstellt. Dieser Widerstand wird bei Gleichstrom oder einer Gleichstromkomponente im Primärkreis durch den Sättigungseffekt im Kernmaterial verringert. Eine gleichzeitig anliegende Wechselspannung führt deshalb zu einem veränderten Wechselstrom in der Wicklung, welche im Gleichstromsignalzweig bearbeitet wird und gegebenenfalls zur Erregung einer zweiten Auslösespule führt.

Die bekannten Anordnungen sind vergleichsweise aufwendig. Aufgabe der Erfindung ist es daher, einen einfacheren Fehlerstromschutzschalter für Allstrom vorzuschlagen.

Die Aufgabe ist erfindungsgemäß dadurch gelöst, daß ein einziger Summenstromwandler mit einem Ringkern gleichermaßen als Pulsstromwandler für den Pulsstromsignalzweig und als Gleichstromsignalgeber für den Gleichstromsignalzweig dient und daß Mittel zur selektiven Einspeisung von Pulsstrom und/oder Gleichstrom in den jeweiligen Auswertesignalzweig vorhanden sind. Die Mittel zur selektiven Einspeisung können ein Taktgeber, vorzugsweise ein Rechteckgenerator, oder aber ein Filter sein.

Im Rahmen der Erfindung wird in einer ersten Realisierung ein Verfahren verwendet, bei welchem ein Summenstromwandler im Zeittakt abwechselnd als Pulsstromwandler und als Gleichstromsignalgeber arbeitet. Der Taktgenerator steuert jeweils die zeitliche Sperrung und Freigabe der Signale für den Pulsstromsignalzweig und den Gleichstromsignalzweig. Bei Freigabe des Signalweges zum Pulsstromsignalzweig ist die Einspeisung des Rechteckgenerators auf die zweite Sekundärwicklung des Summenstromwandlers gesperrt und damit gleichermaßen keine Signalweitergabe an den Gleichstromsignalzweig möglich. Umgekehrt wird bei Sperrung des Signalweges zum Pulsstromsignalzweig die Einspeisung des Rechteckgenerators auf die zweite Sekundärwicklung des Summenstromwandlers und die Signalweitergabe an den Gleichstromsignalzweig freigegeben.

In einer anderen, zweiten Realisierung der Erfindung wird ein Verfahren verwendet, bei welchem durch Signaltrennung mit selektiven Filtern ein Summenstromwandler gleichzeitig als Pulsstromwandler und als Gleichstromsignalgeber arbeitet. Durch solche selektiven Filter wird eine gegenseitige Störung der Signalzweige verhindert. Dabei wird der Gleichstromsignalgeber mit einem Sinusgenerator vorgegebener Frequenz f_{osz} betrieben. Im Summenstromwandler überlagert sich das Signal des Sinusgenerators mit den transformierten Pulsströmen des Summenstromwandlers. Für den Pulsstromsignalzweig wird das Signal des Sinusgenerators durch eine Bandsperre ausgeblendet und nur das Signal der transfomierten Pulsströme weiterverarbeitet. Für den Gleichstromsignalzweig wird dagegen das Signal des Sinusgenerators mit einem Bandpaß herausgefiltert und im Gleichstromsignalzweig weiterverarbeitet.

Weitere Einzelheiten und Vorteile der Erfindung ergeben sich aus nachfolgender Figurenbeschreibung von Ausführungsbeispielen anhand der Zeichnung in Verbindung mit weiteren Schutzansprüchen. Es zeigen jeweils als Blockschaltbild
- Figur 1: einen bekannten Fehlerstromschutzschalter für Pulsstrom und Gleichstrom,
- Figur 2: einen neuen Fehlerstromschutzschalter für Pulsstrom und Gleichstrom, der im Taktverfahren mit einem einzigen Wandlerkern arbeitet,
- Figur 3: eine Alternative eines Fehlerstromschutzschalters gemäß Figur 2 mit gemeinsamen Signalzweigen,
- Figur 4: einen Fehlerstromschutzschalter für Pulsstrom und Gleichstrom mit Signalüberlagerung und selektiver Filterung mit einem Wandlerkern,
- Figur 5: eine Alternative zum Fehlerstromschutzschalter gemäß Figur 4 mit gemeinsamen Signalzweigen,
- Figur 6: eine weitere Alternative zu Figur 3 unter Verwendung eines Sättigungsübertragers,
- Figur 7: eine weitere Alternative zu Figur 3 mit einem Oszillatorsensor,
- Figur 8: eine Alternative zu Figur 4 mit selektiver Filterung und einem Wandlerkern mit Sättigungsübertrager und
- Figur 9: eine weitere Alternative zu Figur 4 mit einem Oszillatorsensor.

Gleiche bzw. gleichwirkende Teile haben in den Figuren gleiche bzw. sich entsprechende Bezugszeichen. Die Figuren werden gruppenweise gemeinsam beschrieben.

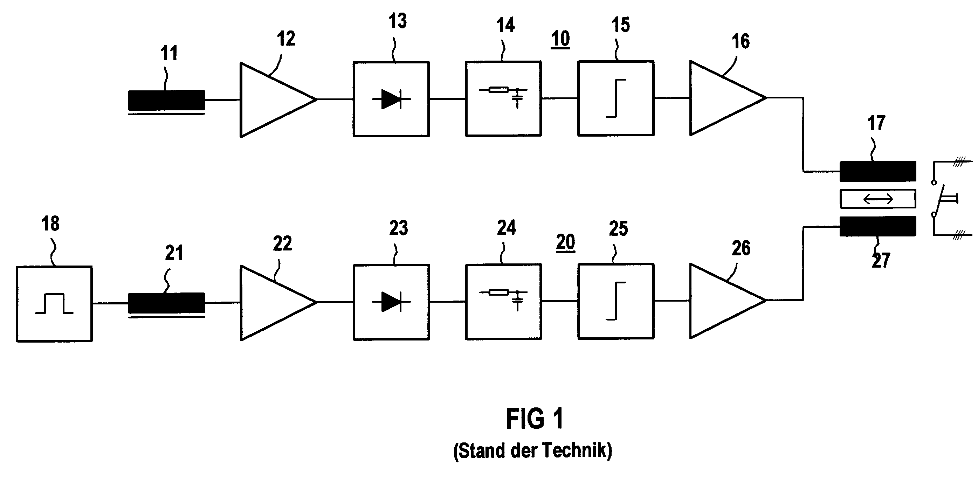

In Figur 1 transformiert in einem ersten Signalzweig 10 ein erster Summenstromwandler 11 Pulsströme und Wechselströme zur Weiterverarbeitung in einem Pulsstromsignalzweig 10. Im einzelnen sind ein Verstärker 12, ein Gleichrichter 13, ein RC-Glied 14, eine Schaltstufe 15 und ein weiterer Verstärker 16 hintereinandergeschaltet, von dem das Signal auf eine erste Auslösespule 17 gelangt. Ganz entsprechend ist ein zweiter Summenstromwandler 21 vorhanden, dem - entsprechend dem ersten Signalzweig 10 - in einem Gleichstromsignalzweig 20 ein Verstärker 22, eine Gleichrichterdiode 23, ein RC-Glied 24, eine Schaltstufe 25 und ein Verstärker 26 nachgeschaltet sind und von dem das Signal auf eine zweite Auslösespule 27 gelangt. Dabei wird der Summenstromwandler 21 im Gleichstromsignalzweig 20 von einem Taktgenerator 18 angesteuert, so daß sich aufgrund des induktiven Widerstandes der Sekundärwicklung im Summenstromwandler 21 ein Signal ergibt. Von den Auslösespulen 17 bzw. 27 wird über einen gemeinsamen Betätgungsmagneten ein Schaltschloß od. dgl. angesteuert.

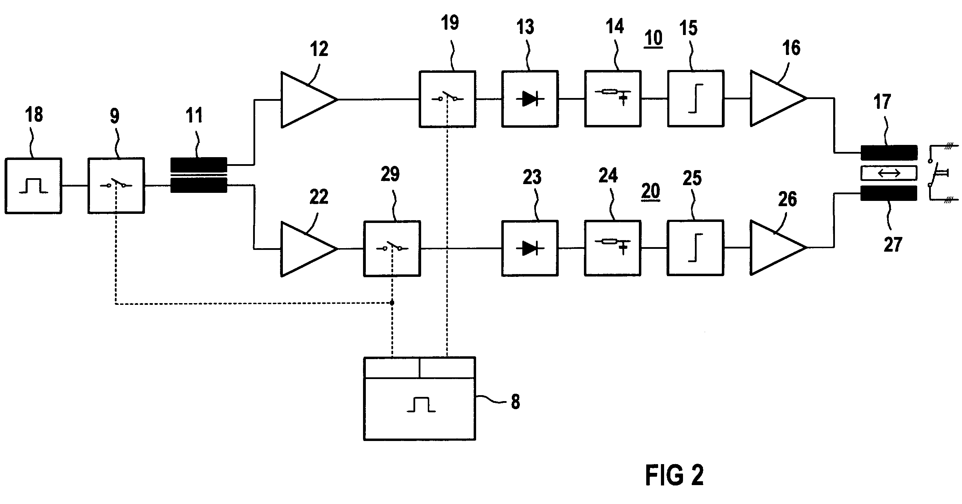

Soweit ist ein Fehlerstromschutzschalter bekannt. In den weiteren Figuren 2 bis 9 sind der Pulsstromsignalzweig 10 und der Gleichstromsignalzweig 20 im wesentlichen gleich aufgebaut.

Speziell in Figur 2 sind die beiden Stromzweige an einem einzigen Summenstromwandler 11 angeschlossen, dem entsprechend Figur 1 ein Taktgenerator 18 vorgeschaltet ist. Wesentlich ist dort, daß über Schalteinheiten 9, 19 und 29, denen ein gemeinsamer Taktgenerator 8 zugeordnet ist, jeweils abwechselnd die Sperrung und Freigabe der Signale für den Pulsstromsignalzweig 10 einerseits und den Gleichstromsignalzweig 20 andererseits erfolgt. Bei Freigabe des Signalweges zum Pulsstromsignalzweig 10 wird die Einspeisung des Rechteckgenerators 18 auf die zweite Sekundärwicklung des Summenstromwandlers 11 gesperrt.

Entsprechendes gilt für die Signalweitergabe an den Gleichstromsignalzweig 20. Umgekehrt wird bei Sperrung des Signalweges zum Pulsstromsignalzweig 10 die Einspeisung des Rechteckgenerators 9 auf die zweite Sekundärwicklung des Summenstromwandlers und die Signalweitergabe an den Gleichstromsignalzweig 20 freigegeben. Die Frequenz des Taktgenerators 8 wird vorteilhafterweise mit ca. 100 Hz gewählt, so daß Reaktionszeiten von 10 ms möglich ist. Die Frequenz des Rechteckgenerators 18 für den Gleichstromsignalgeber liegt dagegen bei 0,5 bis 3 kHz.

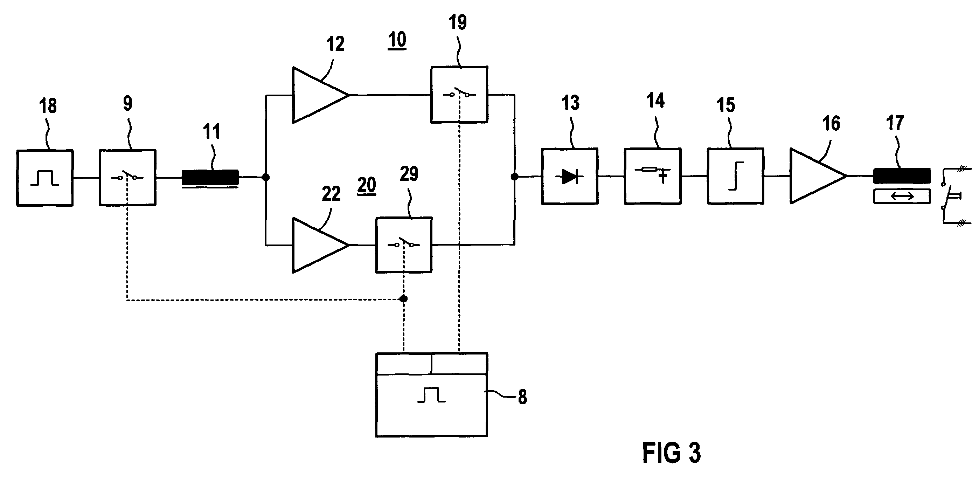

In Figur 3 ist das System gemäß Figur 2 in der Weise abgewandelt, daß die gleiche Sekundärwicklung des Summenstromwandlers 11 im Takt für die Pulsstromtransformation und die Gleichstromsignalgabe verwendet wird. Außerdem ist der weiterverarbeitende Signalzweig mit den Schaltgliedern 13 bis 16 nur einmal vorhanden. Damit ist auch nur eine Auslösespule 17 notwendig.

Als Alternative für die Taktsteuerung gemaß den Figuren 2 und 3 kann eine Signaltrennung mit selektiven Filtern 41 und 42 erfolgen, womit der Summenstromwandler 11 gleichzeitig als Pulsstromwandler und als Gleichstromsignalgeber verwendet wird. Durch die selektiven Filter 41, 42 wird eine gegenseitige Störung der Signalzweige verhindert.

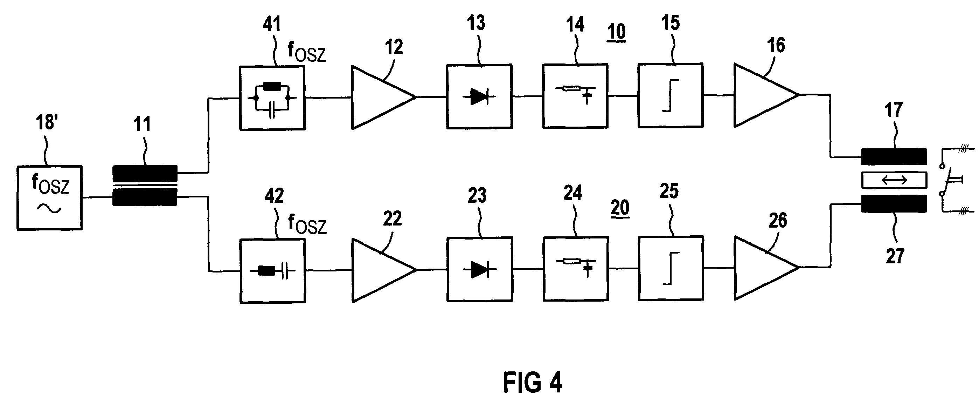

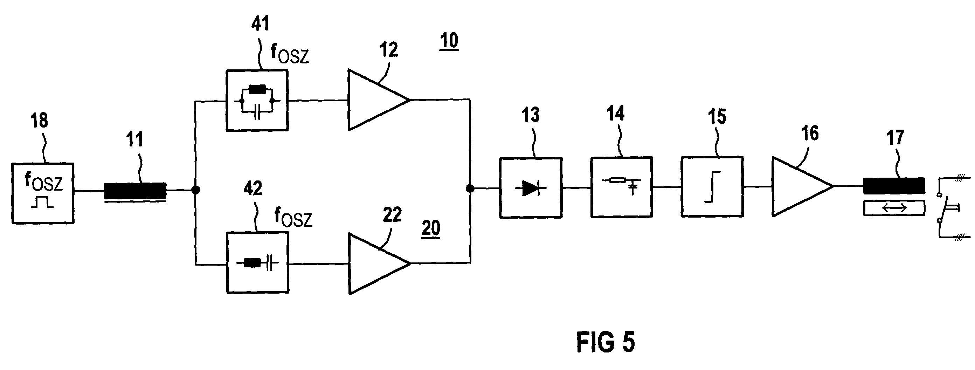

In den Figuren 4 und 5 sind derartige Systeme dargestellt, bei denen jeweils der Pulsstromsignalzweig 10 und der Gleichstromsignalzweig 20 im wesentlichen entsprechend Figur 2 und 3 aufgebaut ist, aber dem Verstärker 12 im Pulsstromsignalzweig eine Bandsperre 41 und dem Gleichstromsignalzweig ein Bandpaß 42 vorgeschaltet sind. Bandsperre 41 und Bandpaß 42 arbeiten jeweils mit der selektiven Frequenz f_{OSZ}, wobei die zweite Sekundärwicklung des Summenstromwandlers 11 von einem Oszillator als Taktgeber 18 mit dieser Frequenz f_{OSZ} angesteuert wird.

Figur 5 unterscheidet sich von Figur 4 in entsprechender Weise wie Figur 3 von Figur 2 dadurch, daß die Signalverarbeitung gemeinsam in einem Signalzweig durchgeführt wird und sich der Pulsstromsignalzweig 10 auf die Bandsperre 41 und nachfolgenden Verstärker 12 und der Gleichstromsignalzweig 20auf den Bandpaß 42 und nachfolgenden Verstärker 22 beschränkt. Dadurch benötigt der Summenstromwandler 11 lediglich eine Sekundärwicklung und ist weiterhin nur eine Auslösespule 17 vorhanden.

Bei den Figuren 4 und 5 beträgt die Generatorfrequenz f_{OSZ} vorzugsweise ungefähr 1 bis 10 kHz. Mit dieser Frequenz wird speziell ein Sinusgenerator 18 als Taktgeber betrieben. Im Summenstromwandler 11 überlagert sich das Signal des Sinusgenerators mit den transformierten Pulsströmen des Summenstromwandlers 11. Für den Pulsstromsignalzweig 10 wird das Signal des Sinusgenerators durch die Bandsperre 41 ausgeblendet und nur das Signal der transformierten Pulsströme weiterverarbeitet. Für den Gleichstromsignalzweig 20 wird das Signal des Sinusgenerators mit dem Bandpaß 42 herausgefiltert und dem Gleichstromsignal-zweig weiterverarbeitet.

Speziell in Figur 5 wird ein Rechteckgenerator 18 als Signalgeber für den Gleichstromsignalzweig 10 mit der Frequenz f_{osz} verwendet. Die Oberschwingungen des Rechteckgenerators 18, welche die Bandsperre des Pulssignalzweiges 20 passieren, werden im nachfolgenden Verstärker als Konstante eingeeicht. Die Weiterverarbeitung nach den Verstärkern erfolgt dann im gemeinsamen Signalzweig mit den Schaltgliedern 13 bis 17.

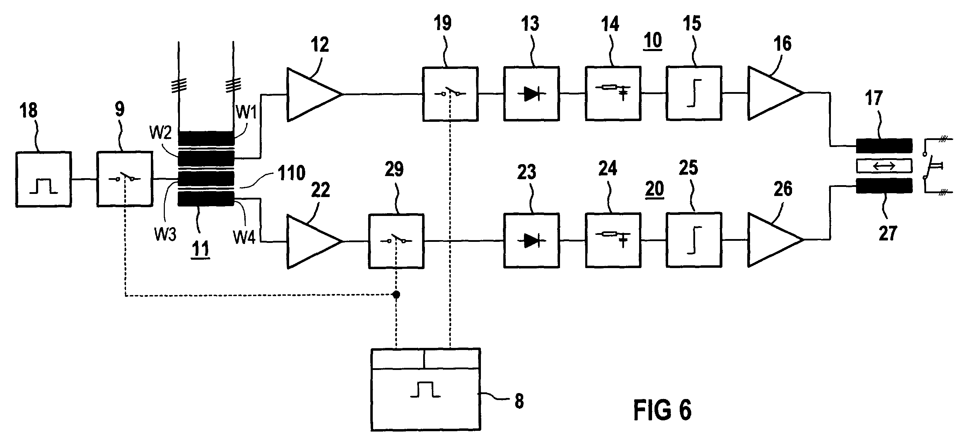

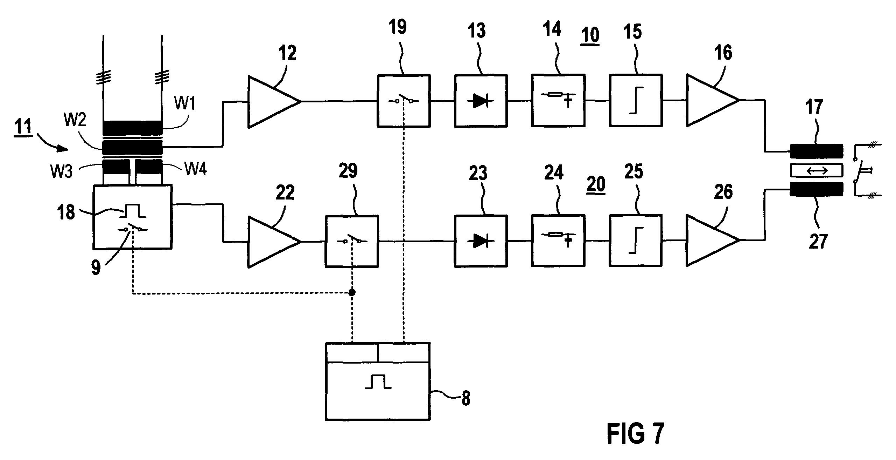

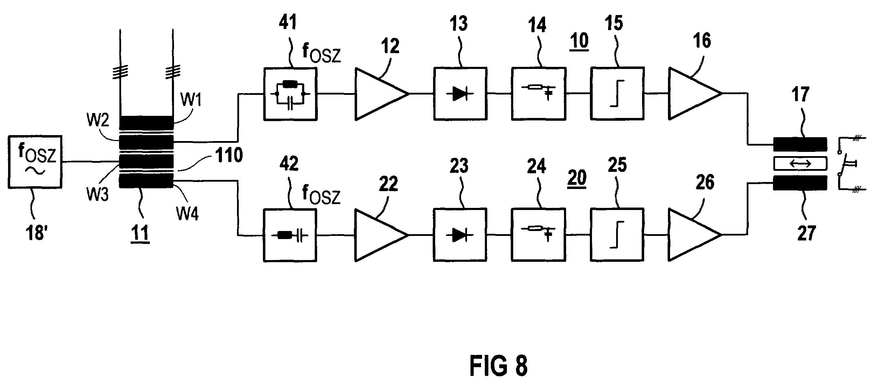

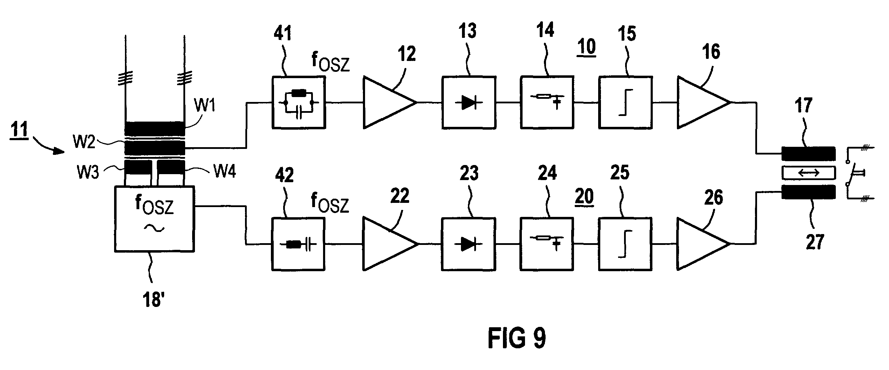

Bei den weiteren Abwandlungen gemäß den Figuren 6, 7 einerseits mit dem Taktverfahren oder den Figuren 8, 9 andererseits mit der selektiven Filterung werden Sättigungsübertrager und/oder Oszillatorsensoren verwendet, so daß sich für die unterschiedlichen Ausführungsformen vier Alternativen ergeben.

Speziell in Figur 6 ist zusätzlich zum Summenstromwandler 11 ein Sättigungswandler 110 als Gleichstromsensor vorhanden. Die aus den Netzkreisleitungen bestehende Wicklung W1 bildet mit der Wicklung W2 einen Übertrager für die Puls- und Wechselfehlerströme, welche im Pulssignalzweig 10 verarbeitet werden. Die Wicklungen W3 und W4 bilden dagegen den Sättigungsübertrager. Durch die Einspeisung der Signalwechselspannung des Oszillators 18 kann der Sättigungsübertrager als Sensor für den Fehlergleichstrom dienen, wobei das übertragene Wechselspannungssignal im Gleichstromsignalzweig 20 verarbeitet wird. Durch den Taktgenerator 8 werden abwechsend die Oszillatorspannung und das verstärkte Ausgangssignal des Sättigungsübertragers einerseits oder das verstärkte Ausgangssignal des Pulsübertragers andererseits durchgeschaltet. Damit wird eine gegenseitige Störung und Beeinflussung der beiden Signalzweige verhindert.

In Figur 7 ist die gleiche Anordnung mit Verwendung eines Oszillatorsensors als Gleichstromsensor dargestellt. Hier bilden die Wicklungen W3 und W4 des Summenstromwandlers die Schwingkreisinduktivitäten des Oszillators 18, dessen Spannung durch den Fehlergleichstrom in der Frequenz und der Amplitude verändert wird. Die Oszillatorspannung wird im Gleichstromsignalzweig 10 verarbeitet. Durch den Taktgenerator 8 werden die Oszillatorspannung oder das verstärkte Ausgangssignal des Pulsstromübertragers abwechselnd durchgeschaltet, womit wiederum die gegenseitige Störung ausgeschaltet wird.

Entsprechendes gilt für die Figuren 8 und 9, wobei jeweils in beiden Figuren entsprechend Figur 4 den Verstärkern 12 und 22 eine Bandsperre 41 einerseits und ein Bandpaß 42 andererseits für die Frequenz f_{OSZ} vorgeschaltet sind. Die Bandsperre im Pulssignalzweig 10 verhindert die Beeinflussung des Signalzweiges durch das Oszillatorsignal. Der Gleichstromsignalzweig 20 wird durch den Bandpaß 42 vor Beeinflussung durch Wechselund Pulsfehlerströme geschützt. Ansonsten ist die Arbeitsweise im wesentlichen die gleiche wie in den anderen Beispielen.

## Patentansprüche

1. Fehlerstromschutzschalter für Allstrom mit wenigstens einem Summenstromwandler und einer nachgeschalteten Auswerteschaltung für jeweils einen für Pulsstrom und/oder Gleichstrom geeigneten Signalzweig, **dadurch gekennzeichnet,** daß ein einziger Summenstromwandler (11) mit einem Ringkern gleichermaßen als Pulsstromwandler für den Pulsstromsignalzweig (10) und als Gleichstromsignalgeber für den Gleichstromsignalzweig (20) dient und daß Mittel (8, 41, 42) zur selektiven Einspeisung von Pulsstrom und/oder Gleichstrom in den jeweiligen Auswertesignalzweig (10, 20) vorhanden sind.

2. Fehlerstromschutzschalter nach Anspruch 1, **dadurch gekennzeichnet,** daß als Einspeisemittel ein Taktgeber (8) vorhanden ist, der abwechselnd den Pulstromsignalzweig (10) oder den Gleichstromsignalzweig (20) freigibt.

3. Fehlerstromschutzschalter nach Anspruch 2, **dadurch gekennzeichnet,** daß der Taktgeber ein Rechteckgenerator (8) ist.

4. Fehlerstromschutzschalter nach Anspruch 1, **dadurch gekennzeichnet,** daß als Einspeisemittel Filter (41, 42) vorhanden sind.

5. Fehlerstromschutzschalter nach Anspruch 2, **dadurch gekennzeichnet,** daß der Gleichstromsignalzweig (10) mit einem Sinusgenerator (18') vorgegebener Frequenz (f_{OSZ}) betrieben wird.

6. Fehlerstromschutzschalter nach Anspruch 5, **dadurch gekennzeichnet,** daß für den Pulsstromsignalzweig (10) das Signal des Sinusgenerators (18') durch eine Bandsperre (41) ausgeblendet wird.

7. Fehlerstromschutzschalter nach Anspruch 5, **dadurch gekennzeichnet,** daß für den Gleichstromsignalzweig (20) das Signal des Sinusgenerators (18') mit einem Bandpaß (42) herausgefiltert wird.

8. Fehlerstromschutzschalter nach einem der vorhergehenden Ansprüche, **dadurch gekennzeichnet,** daß Pulsstromsignalzweig (10) und Gleichstromsignalzweig (20) jeweils eigene Auslösespulen (17, 27) ansteuern.

9. Fehlerstromschutzschalter nach Anspruch 1, **dadurch gekennzeichnet,** daß der einzige Summenstromwandler (11) mit der gleichen Sekundärwicklung (W2)zur Pulstransformation und zur Gleichstromsignalabgabe dient.

10. Fehlerstromschutzschalter nach Anspruch 1, **dadurch gekennzeichnet,** daß der Summenstromwandler (11) als Sättigungswandler arbeitet, wobei der-Sättigungswandler als Sensor für den Fehlergleichstrom dient.

11. Fehlerstromschutzschalter nach Anspruch 1, **dadurch gekennzeichnet,** daß der Summenstromwandler (11) mit weiteren Sekundärwicklungen (W3, W4) Schwingkreisinduktivitäten eines Oszillators bildet, wobei ein zugeordneter Oszillatorsensor als Gleichstromsensor dient.
